# DEMANDE DE BREVET EUROPEEN

(11) **EP 1 130 835 A1**
(43) Date de publication de la demande: **05.09.2001**
(21) Numéro de dépôt: 01400425.3
(22) Date de dépôt: 19.02.2001
(51) Int. Cl.: H04J 14/02, H04B 10/18

(54) **Système de transmission a multiplexage en longueur d'onde à filtrage dissymétrique**

(30) Priorité: 03.03.2000 FR 0002754
(71) Demandeur: ALCATEL, 75008 Paris (FR)
(72) Inventeur: Frignac, Yann, 75005 Paris (FR); Bigo, Sébastien, 91120 Palaiseau (FR)
(74) Mandataire: Lamoureux, Bernard

(57) **Abrégé**

L'invention concerne un système de transmission à multiplexage en longueur d'onde; pour un canal, l'intervalle spectral avec le canal adjacent d'un côté est différent de l'intervalle spectral avec le canal adjacent de l'autre côté. On utilise un filtre de démultiplexage atténuant plus fortement le spectre du canal du côté où l'intervalle spectral avec les canaux voisins est le plus faible.

L'invention permet d'améliorer l'efficacité spectrale, tout en conservant des fréquences choisies sur une grille de fréquences régulièrement espacées.

## Description

La présente invention concerne les systèmes de transmission par fibre optique, et plus précisément, les systèmes de transmission par fibre optique à multiplexage en longueur d'onde à haut débit. On appelle dans ce contexte "haut débit" un débit par canal supérieur ou égal à 10 Gbit/s.

La recommandation ITU-T G 692, Optical interfaces for multichannel systems with optical amplifiers, 10/98, propose un pas en fréquence régulier de 50 GHz (appendice II). Il serait intéressant de pouvoir respecter cette recommandation aussi pour des systèmes de transmission à haut débit; toutefois, un des problèmes qui se pose dans ce cas est celui de la diaphonie cohérente ("coherent cross-talk" en langue anglaise) entre les canaux voisins. L'appendice V propose des intervalles spectraux variables de manière pseudo-aléatoire pour réduire le mélange à quatre ondes. Il y est expressément suggéré (§V.1.1) de choisir chaque fréquence de canal présentant un intervalle spectral inégal de sorte qu'aucune nouvelle puissance optique générée par le mélange quatre ondes ne tombe dans un canal de signal optique.

Y. Yano et autres, 2.6 Terabit/s WDM transmission experiment using optical duobinary coding, ECOC'96, ThB3.1 pages 5.3 à 5.6 est représentatif des meilleurs résultats susceptibles d'être obtenus actuellement dans des systèmes de transmission; il est proposé dans ce document d'utiliser un codage duobinaire pour une transmission sur des canaux séparés de 33,3 GHz. Cet article utilise le codage duobinaire comme technique de réduction de la largeur de bande, pour arriver à une bonne efficacité spectrale.

L'invention se propose d'améliorer l'efficacité spectrale dans les systèmes de transmission à multiplexage en longueur d'onde; elle permet en outre de conserver un positionnement spectral des canaux qui est conforme à la recommandation de l'ITU mentionnée plus haut.

Plus précisément, l'invention propose un système de transmission à multiplexage en longueur d'onde, avec au moins un canal pour lequel l'intervalle spectral avec le canal adjacent d'un côté est différent de l'intervalle spectral avec le canal adjacent de l'autre côté, et un filtre de démultiplexage atténuant plus fortement du côté du canal où l'intervalle spectral avec les canaux voisins est le plus faible.

De préférence, pour un canal présentant des intervalles spectraux différents avec les canaux adjacents, l'intervalle spectral le plus important est supérieur d'au moins 20% à l'intervalle spectral le plus faible.

Dans un mode de réalisation préféré, les longueurs d'onde des différents canaux sont choisies parmi un ensemble de longueurs d'onde, la différence entre deux longueurs d'onde dudit ensemble étant un multiple de la différence minimale entre deux longueurs d'onde dudit ensemble.

Il est aussi possible que les longueurs d'onde des différents canaux soient choisies parmi un ensemble de longueurs d'onde régulièrement espacées, par enlèvement d'une longueur d'onde sur trois dans ledit ensemble.

Avantageusement, la différence d'atténuation par le filtre à une fréquence décalée de la moitié de la fréquence de modulation de part et d'autre de la fréquence centrale du canal est supérieure à 5 dB.

Il est possible que le filtre soit un filtre à fonction de transfert symétrique et que la fréquence centrale du filtre soit décalée par rapport à la fréquence centrale du canal. On peut aussi choisir un filtre à fonction de transfert dissymétrique.

D'autres caractéristiques et avantages de l'invention apparaîtront à la lecture de la description qui suit de modes de réalisation donnés à titre d'exemples uniquement, et en référence aux figures qui montrent :
- figure 1, un spectre des canaux dans un exemple de mise en oeuvre de l'invention;
- figure 2, un spectre d'un canal filtré dans l'exemple de la figure 1;
- figure 3, un diagramme de l'oeil pour le système de transmission des figures 1 et 2;
- figures 4 à 6, des figures correspondant aux figures 1 à 3, pour des canaux présentant un intervalle spectral régulier.

L'invention propose, pour augmenter l'efficacité spectrale dans un système de transmission à multiplexage en longueur d'onde, d'utiliser un intervalle spectral différent entre les différents canaux, et d'utiliser conjointement un filtre de démultiplexage dissymétrique pour le filtrage des canaux. Pour un canal donné, le filtre de démultiplexage atténue plus fortement du côté du canal où l'intervalle spectral avec les canaux voisins est le plus faible. On entend ici par "côté" la position spectrale des différents canaux, et un "côté" est constitué par l'ensemble des fréquences qui sont plus faibles - ou respectivement plus hautes - que la fréquence du canal en cause.

Cette dissymétrie du filtre de démultiplexage par rapport au canal peut résulter d'un décalage de la fréquence centrale du filtre par rapport à la fréquence centrale du canal, dans le cas où le filtre présente une fonction de transfert symétrique; cette dissymétrie peut aussi résulter de la forme de la fonction de transfert du filtre. Des exemples de filtres utilisables sont donnés plus bas.

De préférence, la différence d'atténuation entre les deux côtés du canal est supérieure à 5dB. Cette différence est calculée en mesurant l'atténuation du filtre, pour des fréquences situées de part et d'autre de la fréquence centrale, décalées de la moitié de la fréquence de modulation.

Par ailleurs, pour un canal présentant des intervalles spectraux différents avec les canaux adjacents, l'intervalle spectral le plus important est avantageusement supérieur d'au moins 20% à l'intervalle spectral le plus faible.. Dans l'exemple plus bas, cette différence est de 100 % - et pour chaque canal, l'intervalle spectral est deux fois plus important d'un côté que de l'autre.

L'invention s'applique indépendamment de la grille de fréquence utilisée pour les différents canaux. Autrement dit, dans l'exemple de la recommandation ITU-T G.692, il est proposé d'utiliser des fréquences choisies parmi un ensemble de fréquences distantes de 50 GHz. L'invention s'applique très bien à un choix des fréquences dans un tel ensemble de fréquence. Elle s'applique aussi lorsque les fréquences sont choisies indépendamment d'une telle grille.

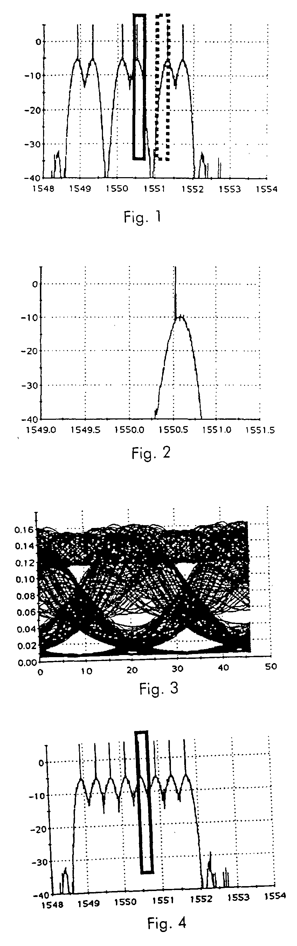

Il est avantageux, lorsque les fréquences des différents canaux sont choisies sur une grille de fréquence - c'est-à-dire lorsque l'intervalle spectral entre deux canaux est un multiple d'un intervalle spectral de base - de ne choisir que deux fréquences sur trois dans la grille de fréquence. Autrement dit, dans un tel cas, comme représenté sur la figure 1, pour un canal donné, l'intervalle spectral avec le canal voisin d'un côté est égal à l'intervalle spectral de base, et l'intervalle spectral avec le canal voisin de l'autre côté est égal au double de l'intervalle spectral de base. Dans la grille, une fréquence sur trois n'est pas utilisée. Cette configuration est avantageuse en ce qu'elle permet pour chacun des canaux de disposer d'un intervalle spectral différent d'un côté et de l'autre, tout en conservant la grille de fréquences et une efficacité spectrale maximale.

Pour un tel choix périodique des fréquences, la solution de l'invention va à l'encontre de la suggestion proposée dans la recommandation ITU-T G 692, pour réduire les effets du mélange quatre ondes.

L'invention s'applique indépendamment du format de modulation utilisé. Elle s'applique de préférence à des formats de modulation dont le spectre est large mais peut aussi être utilisée en combinaison avec des formats de modulation au spectre plus étroit tels que le duobinaire susmentionné pour augmenter encore l'efficacité spectrale. L'invention permet dans une telle configuration d'améliorer l'efficacité spectrale, sans utiliser des dispositifs de filtrage élaborés, et sans utiliser de formats complexes.

On donne maintenant en référence aux figures un exemple de mise en oeuvre de l'invention. On considère un système de transmission à 6 canaux, chaque canal présentant un débit de 40 Gbit/s. Les canaux sont choisis sur une grille de fréquences espacées de 50 GHZ, autour de 1550 nm. Comme expliqué plus haut, on n'utilise que deux fréquences sur trois. Autrement dit, si les fréquences sont notées λ1 à λ8, on utilise pour le multiplex les fréquences λ1, λ2, λ4, λ5, λ7 et λ8. Dans cette configuration, pour chaque canal, l'intervalle spectral avec le canal adjacent d'un côté est de 50 GHz, et l'intervalle spectral avec le canal adjacent de l'autre côté est de 100 GHz. Bien sûr, les canaux à chaque extrémité du multiplex n'ont de canal voisin que d'un côté; il reste vrai que l'intervalle spectral d'un côté - qui est égal à l'intervalle spectral de base - est supérieur à l'intervalle spectral de l'autre côté - qui est infini.

Dans ce cas, comme le propose l'invention, le filtre de démultiplexage utilisé atténue plus fortement d'un côté que de l'autre. Dans l'exemple, on utilise comme filtre un filtre gaussien présentant une largeur à mi-hauteur de 0,24 nm (30 GHz à 1550nm). Le filtre est décalé par rapport au canal filtré, le décalage est de 0.12 nm. Dans une telle configuration, la différence d'atténuation à 15GHz de part et d'autre de la fréquence centrale du canal est de 14 dB. La fréquence de modulation dans l'exemple est de 40 GHz et la la différence d'atténuation à 20 GHz de part et d'autre de la fréquence centrale du canal est encore supérieure à 14 dB.

La figure 1 montre le spectre du signal avec en abscisse les longueurs d'onde en nanomètre et en ordonnée l'atténuation; on reconnaît nettement sur la figure les six canaux, et les fréquences qui ne sont pas utilisées. On a porté en traits gras sur la figure la position spectrale du filtre pour le canal à la fréquence λ5, et en traits pointillés la position spectrale du filtre pour le canal à la fréquence λ7. Pour le canal à la fréquence λ5, le filtre atténue plus fortement du côté des faibles longueurs d'onde que du côté des fortes longueurs d'ondes. Autrement dit, le filtre atténue plus fortement du côté du canal à la fréquence λ4, qui est espacé de 50 GHZ, que du côté du canal à la fréquence λ7, qui est espacé de 100 GHz. A l'inverse, pour le canal à la fréquence λ5, le filtre atténue plus fortement du côté des fortes longueurs d'onde que du côté des faibles longueurs d'ondes. Autrement dit, le filtre atténue plus fortement du côté du canal à la fréquence λ8, qui est espacé de 50 GHZ, que du côté du canal à la fréquence λ5, qui est espacé de 100 GHz.

La figure 2 montre le canal filtré. Dans l'exemple, il s'agit du canal à la fréquence λ5. La figure montre que ne subsiste après filtrage que les signaux du canal, avec du bruit à -10dB.

La figure 3 montre le diagramme de l'oeil pour le système de transmission des figures 1 et 2. Le diagramme est bien ouvert.

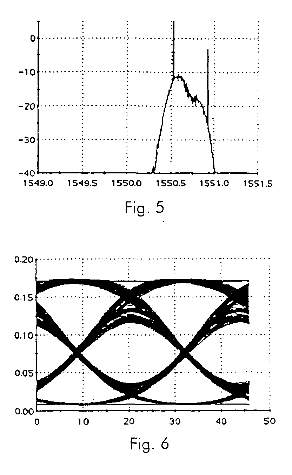

Les figures 4 à 6 sont similaires à celles des figures 1 à 3, mais correspondent au cas où les canaux sont régulièrement espacés, c'est-à-dire au cas d'utilisation de l'ensemble des fréquences de la grille. Par rapport à l'exemple précédent, on rajoute simplement les canaux aux fréquences λ3 et λ6. La figure 5 montre qu'après filtrage, on retrouve une partie du signal du canal voisin, avec une atténuation qui est de l'ordre de 6 dB. De même la figure 6 montre que le diagramme de l'oeil est nettement plus fermé que celui de la figure 3 à cause de la diaphotie cohérente. Le fait selon l'invention d'utiliser outre une atténuation dissymétrique, un intervalle spectral différent entre les canaux permet d'améliorer la qualité de la transmission.

Par rapport à une transmission avec un intervalle spectral entre les canaux de 100 GHz, avec un format de signal et un débit identiques, l'amélioration en termes d'efficacité spectrale apportée par l'invention est de 25%, et l'efficacité spectrale atteint dans l'exemple proposé 0,53 Bit/s/Hz, tout en conservant la grille de fréquences proposées par la recommandation de l'ITU.

Il apparaît à l'homme du métier que l'invention ne propose pas une méthode de modulation ou de démodulation du genre de la bande latérale unique, ou de la bande latérale atténuée. Il n'existe aucune comparaison possible entre ces méthodes de modulation et l'invention.

Bien entendu, l'invention n'est pas limitée aux modes de réalisation préférés décrits à titre d'exemple, mais est susceptible de nombreuses variations. On peut ainsi utiliser une autre grille de fréquence que la grille avec un pas de 50 GHz; on peut mettre en oeuvre l'invention à différents endroits dans le système de transmission, et plus spécifiquement à tout endroit où il y a un démultiplexage des cangux. L'invention est décrite dans le cas où l'intervalle spectral avec les canaux adjacents est identique pour tous les canaux - 50 GHz d'une part et 100 GHz d'autre part -; l'invention peut aussi être mise en oeuvre dans des cas où les intervalles spectraux sont distincts pour les différents canaux.

## Revendications

1. Un système de transmission à multiplexage en longueur d'onde, avec au moins un canal pour lequel l'intervalle spectral avec le canal adjacent d'un côté est différent de l'intervalle spectral avec le canal adjacent de l'autre côté, et un filtre de démultiplexage atténuant plus fortement du côté du canal où l'intervalle spectral avec les canaux voisins est le plus faible.

2. Le système de la revendication 1, **caractérisé en ce que**, pour un canal présentant des intervalles spectraux différents avec les canaux adjacents, l'intervalle spectral le plus important est supérieur d'au moins 20% à l'intervalle spectral le plus faible.

3. Le système de la revendication 1 ou 2, **caractérisé en ce que** les longueurs d'onde des différents canaux sont choisies parmi un ensemble de longueurs d'onde, la différence entre deux longueurs d'onde dudit ensemble étant un multiple de la différence minimale entre deux longueurs d'onde dudit ensemble.

4. Le système de la revendication 1, 2 ou 3, **caractérisé en ce que** les longueurs d'onde des différents canaux sont choisies parmi un ensemble de longueurs d'onde régulièrement espacées, par enlèvement d'une longueur d'onde sur trois dans ledit ensemble.

5. Le système de l'une des revendications 1 à 4, **caractérisé en ce que** la différence d'atténuation par le filtre à une fréquence décalée de la moitié de la fréquence de modulation de part et d'autre de la fréquence centrale du canal est supérieure à 5 dB.

6. Le système de l'une des revendications 1 à 5, **caractérisé en ce que** le filtre est un filtre à fonction de transfert symétrique et en ce que la fréquence centrale du filtre est décalée par rapport à la fréquence centrale du canal.

7. Le système de l'une des revendications 1 à 6, **caractérisé en ce que** le filtre est un filtre à fonction de transfert dissymétrique.
